# EUROPEAN PATENT APPLICATION

(11) **EP 1 098 120 A1**
(43) Date of publication of application: **09.05.2001**
(21) Application number: 00850181.9
(22) Date of filing: 01.11.2000
(51) Int. Cl.: F16K 27/02, F16K 17/04, F16K 7/14

(54) **Safety valve**

(30) Priority: 03.11.1999 NO 995371
(71) Applicant: Braathen, Thor Frolich, N-3359 Eggedal (NO)
(72) Inventor: Braathen, Thor Frolich, N-3359 Eggedal (NO)
(74) Representative: Modin, Jan

(57) **Abstract**

A safety valve has a housing (1) of plastic or another suitable material. A tubular insert (5) of metal is fitted in the housing, and provides a connection between an inlet (2) in the housing (1) and an outlet (3) in the housing (1), via a gasket-sealed flow connection which comprises a spring-loaded diaphragm (10) that rests against a ring seat (9).

## Description

The invention relates to a safety valve which comprises a housing having an inlet and an outlet and a gasket-sealed flow connection between the inlet and the outlet, which gasket is adjustably manoeuvrable for spring-controlled closing of the connection, against a seat in the inlet.

In safety valves of this type it has been found that the seat (a ring seat) is damaged over time, as small dents and the like gradually develop, so that as time goes by the valve will not close and will no longer function in a satisfactory manner.
It is not known what this phenomenon is due to, but tests have shown that it is essential to have a hard seat or ring edge. Ms/nickel has been found to be a highly suitable material in this connection.

Lime and lime deposits are also a problem in safety valves of this type.

There is a need to reduce costly materials consumption and to develop a less expensive safety valve.

Plastic is a suitable material for many purposes, also for valves. In the case of safety valves it must be ensured that the valve can withstand the prevailing pressure in the plant and that the seat satisfies the hardness and resistance requirements. Plastic also has the advantage that it does not provide favourable conditions for lime deposits. Moreover, it is an inexpensive material. One of the drawbacks of plastic is that it is not particularly pressure-resistant.

According to the invention, a safety valve is proposed as mentioned in the introduction, characterised in that the housing is of plastic or another suitable material and that the inlet comprises a pressure and liquid compatible tubular insert of metal fitted in the housing and having an outer connection end and an inner end made in the form of the said seat.

The tubular insert can be pressed into the housing or embedded in the housing. An especially advantageous embodiment is one in which the tubular insert is capable of being screwed into the housing.

By using a tubular insert of metal, for example, Ms/nickel, the necessary pressure-withstanding capability and liquid resistance are obtained in the area where the liquid is under pressure.

When using a tubular insert that is capable of being screwed into the housing, it is possible to use one and the same housing embodiment for several types of inserts (pipe size).

The invention will now be described with reference to the drawings, wherein:
Fig. 1 is a sectional view through a housing and insert according to the invention; and
Fig. 2 shows the same, but with safety valve equipment connected thereto.

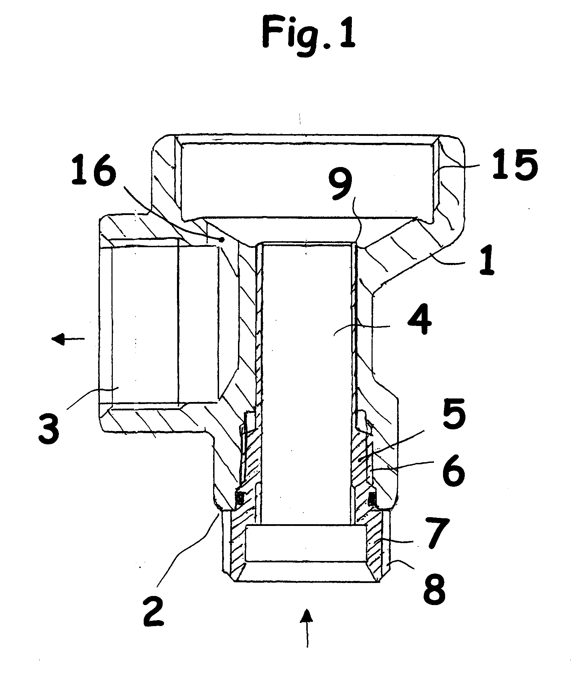

Fig. 1 shows a housing 1 of plastic. The housing has an inlet 2 and an outlet 3. Between the inlet and the outlet there is a flow connection 4.

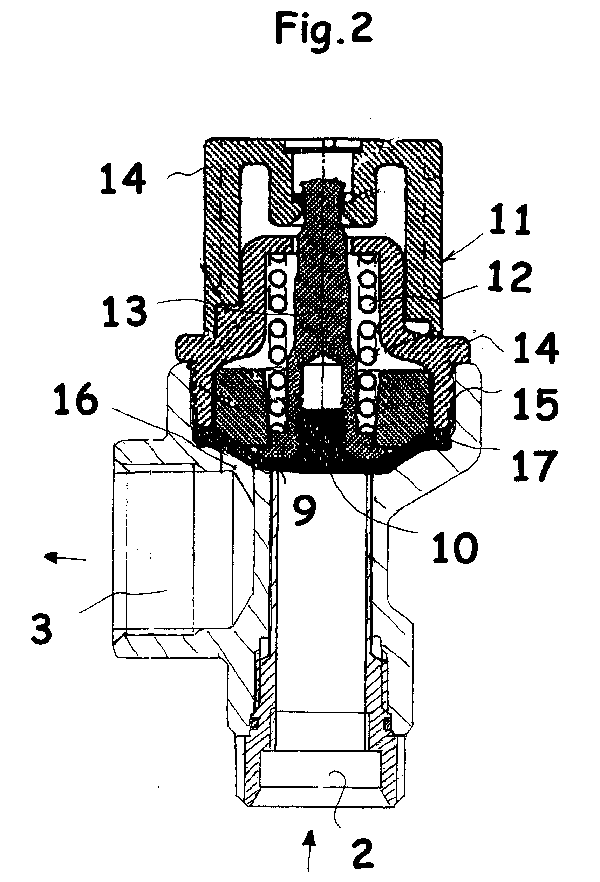

In the housing in Fig. 1 a tubular insert 5 has been screwed into place. The threaded connection between the tubular insert 5 and the housing 1 is indicated by means of the reference numeral 6. The tubular insert 5 has an outer connection end 7 having external threads 8, and has an inner end which is made in the form of a ring seat 9. This ring seat 9 is designed for interaction with a sealing diaphragm 10 (see Fig. 2) which forms a part of a safety valve assembly 11 of a known type per se.

The diaphragm 10 is secured in a retaining part 13 that subject to the action of a coil spring 12, and which is connected to an adjusting housing 14. The spring 12 acts between the diaphragm 10 and a cup member 14 which at 15 is screwed into the housing 1.

The outer connection end 7, 8 is designed for a jubilee clip connection for pipes that are to be connected to the valve.

The mode of operation of the safety valve is the same as with previously known safety valves. If the pressure rises in the inlet 2, the diaphragm 10 will be lifted from the ring seat 9 and the liquid will then flow into the outlet 3 through the duct 16. The diaphragm 10 is fixed around its periphery, at 17, between the housing and the cup-shaped nut member 14.

The advantage of the new valve is that the pressure-exposed part is made of a suitable metal, whilst the rest of the housing may be made of plastic or another suitable, preferably cheaper and lighter material. The hard ring edge which forms the seat 9 helps to prevent the aforementioned wear. The new safety valve is also favourable with regard to the prevention of lime deposits.

## Claims

1. A safety valve, comprising a housing (1) having an inlet (2) and an outlet (3) and a gasket-sealed flow connection (4) between inlet (2) and outlet (3), which gasket (10) is adjustably manoeuvrable for spring-controlled closing of the connection, against a seat (9) in the inlet, characterised in that the housing (1) is of plastic or another suitable material and that the inlet comprises a pressure and liquid compatible tubular insert (5) of metal fitted in the housing (1), which insert has an outer connection end (7) and an inner end made in the form of said seat (9).

2. A safety valve according to claim 1, characterised in that the tubular insert (5) is pressed into or embedded in the housing (1).

3. A safety valve according to claim 1, characterised in that the tubular insert (5) is capable of being screwed into the housing (1).

4. A safety valve according to one of the preceding claims, characterised in that the tubular insert is made of Ms/nickel.
